Europäisches Patentamt

**European Patent Office**

Office européen des brevets

(19)

(11) Publication number: **0 014 541**

**A1**

(12) **EUROPEAN PATENT APPLICATION**

(21) Application number: **80300222.9**

(22) Date of filing: **24.01.80**

(51) Int. Cl.³: **E 04 F 15/12**
**C 04 B 13/00, C 04 B 15/00**

(30) Priority: **26.01.79 GB 7902867**

(43) Date of publication of application:
**20.08.80 Bulletin 80/17**

(84) Designated Contracting States:
**AT BE CH DE FR IT LU NL SE**

(71) Applicant: **G.R.A.B. Resins (Leicester) Limited**
**Clifford Street**
**South Wigston Leicester, LE8 2SH(GB)**

(72) Inventor: **Southerden, Lindsay Morgan**
**1 Pells Close**
**Fleckney, Leicestershire(GB)**

(74) Representative: **Hallam, Arnold Vincent et al,**
**E.N. LEWIS & TAYLOR 144 New Walk**
**Leicester LE1 7JA(GB)**

(54) Improvements in building materials.

(57) The present invention provides an improved building material which comprises a mixture of an alumina based aggregate, cement, a multi-polymer emulsion and a lightweight aggregate or concrete sand.

EP 0 014 541 A1

Title: Improvements in Building Materials

Conventional concrete or granolithic floor surfacings such as are used in industrial environments suffer from serious disadvantages in that they are highly susceptible to attack by materials encountered in general use in a wide range of industries. Such materials as oils, greases, fats, sugar and mild acids as well as common effluents from for example breweries, paper works, food factories and dairies readily attack concrete and conventional polymer-type floors and can cause severe damage over relatively short periods.

The present invention seeks to provide an improved building material.

Accordingly the present invention provides a building material comprising a mixture of an alumina based aggregate, cement, a multi-polymer emulsion and a lightweight aggregate or concrete sand.

Where the material is to be used as a floor surfacing or screed the concrete sand is used rather than a lightweight aggregate. The sand or lightweight aggregate preferably meets the specification for British Standard 882 Part 2: 1973 zone 4 and is for example Sandford concrete sand.

The lightweight aggregate is used for a wall surfacing material.

While it is possible to use a sand aggregate outside the above specification the results achieved are inferior, the trowelability and composition of the material particularly being affected.

The alumina based aggregate is advantageously graded with a particle size in the range 180 mesh to 6mm, the particular grading or particle size used depending on the thickness of the layering of material to be used.

The mix preferably includes an anti-foam additive which may be included in the emulsion. Such additives are advisable where the building material is to be machine mixed.

The material is suitable for use as a floor or skirting surface and may be mixed and laid by conventional means such as trowel, float or power trowel. The material may be used to form a new surface or in resurfacing or repairing damaged surfaces. The ratio of the material constituents may be varied to provide surfaces of differing strengths for example for runways, roadways, paths and similar horizontal or sloping surfaces.

A typical floor surfacing material according to the present invention comprises by weight:

1. 108 Kg of chemically inert mineral processed and graded aggregate having a particle size of approximately 3mm and being a minimum 60% alumina based.

2. 75 Kg Sandford concrete sand meeting B.S. 882 part 2: 1973 zone 4 (reproduced in Table 1).

3. 50 Kg of hydraulic high alumina cement to B.S. 915: 1972.

4. 11.5 Kg of multi-polymer emulsion.

Table 1

| Sieve Size | BSI Limits % Passing |
|---|---|
| 10.00 mm | 100 |
| 5.00 mm | 95-100 |
| 2.36 mm | 95-100 |
| 1.18 mm | 90-100 |
| 600 u | 80-100 |
| 300 u | 15-50 |
| 150 u | 0-15 |

The above material mix is sufficient to cover approximately 6.5 $m^2$ at an average thickness of 12 mm and is a heavy duty surfacing. For lightweight purposes the alumina based aggregate particle size may be reduced.

A high alumina based aggregate is essential to the invention. The aggregate is normally of 3 mm mesh size for laying surfaces of between 9 mm and 12 mm in thickness although the particle sizes may be varied for different surface thicknesses. A typical chemical analysis of such an aggregate is as follows:-

## Chemical Analysis

| Constituent | % by weight |
|---|---|
| Silica | 3.06 |
| Ferric Oxide | 24.20 |
| Calcium Oxide | not more than 0.3% |
| Magnesia | not more than 0.26% |
| Titanium Dioxide | 3.32 |
| Manganese Oxide | Trace (quantity not measurable) |
| Alumina as $Al_2O_3$ | 60.91 |
| Loss of Ignition | 7.95 |
| | 100.00 |

The Manganese Oxide is present as a contaminant the exact quantity by weight not being readily measurable.

The aggregate is chemically inert and has the following physical properties:-

## Technical Specification

| | |
|---|---|
| Laboratory determined Polished Stone Value | 68 |
| Aggregate Abrasion Value | 1.9 |
| Aggregate Impact Value | 8 |
| Aggregate Crushing Value | 8.2 |
| Flakiness Index | 26 |
| Hardness (Mohs Scale) | 8.5 to 9.0 |

The hardness of aggregate is a factor in determining the crushing strength of the building material and a minimum hardness of approximately 6 (Mohs scale) is preferred. The abrasion and impact values are also dependent on the aggregate hardness.

The multi-polymer emulsion used in the building material is not critical but a preferred emulsion marketed as G.R.A.B. Acrylic Multi-Polymer Emulsion has the following specification:-

| | | |
|---|---|---|
| Non Volatile (solid) content | (% by weight) | 49 - 51 |
| Viscosity @ 25°C, poises | | 0.2 - 0.6 |
| pH | | 8.0 - 8.5 |
| Emulsifying system | | Anionic |
| Particle charge | | Negative |

Emulsion Properties

| | |
|---|---|
| Specific gravity @ 20$^{o}$C | 1.07 |
| High temperature effect (7 days @ 60$^{o}$C) | No change |
| Freeze thaw effect - ISO/1147:1975 (16 hours @ 10$^{o}$C: 8 hours @ 20$^{o}$C) | No change |

The emulsion exhibits little or no change when maintained at 60$^{o}$C for seven days and when subjected to a freeze-thaw effect (ISO/1147:1975) - 16 hours at 10$^{o}$C and 8 hours at 20$^{o}$C.

Similar types of acrylic and styrene-butadiene emulsions may be used in similar ratios to the G.R.A.B. Acrylic Multi-Polymer Emulsion depending upon the final specification of the surface to be laid.

The laying of a surface of building material according to the present invention on an existing concrete base will now be described, although any suitable substrate may be used.

The concrete base should advantageously be visibly damp. If the concrete base is a newly laid base then its surface may be left either lightly tamped or wood-floated smooth and sufficiently level to receive the specified thickness of building material.

The base concrete should be sound, non-friable and also free from oily or other contaminents. A key for the building material is next provided on the concrete base surface, for example by acid etching. Scabbling of the concrete base is not necessary except where the upper surface is not sound and has to be removed down to sound, clean concrete. The concrete base is now ready to receive the building material and should be kept moist, that is visibly damp in the working area during laying of the material. This may require special care to be taken where exceptionally warm or porous conditions are experienced.

A priming grout is first mixed and comprises for example a mixture of high alumina cement and G.R.A.B. emulsion. Typical quantities are 3 Kg of cement to 0.57 l of emulsion to provide a grout coat covering approximately 3 $m^2$. A suitable emulsion is SFC/1 G.R.A.B. emulsion.

Mixing is effected by adding the cement to the emulsion, stirring well to a thick, creamy consistency. The grout coat is applied to the damp concrete base by a brush, preferably of the semi-stiff sweeping type, and if the consistency of the grout is correct the brush marks will remain visible in the grout. It is important not to allow the grout coat to dry out before the top coat (known as the screed mix) is applied. If the grout coat does dry out then it should not be wetted with water. Instead, more grout should be applied.

The screed, which should have been mixed while the grout coat was being applied, is laid on top of the grout coat, normally in two to three metre wide bays using battens or guides.

For a super heavy duty screed firstly 28 Kg of high alumina aggregate and 22 Kg of Sandford concrete sand, for example sufficient to cover 1.75 $m^2$ with a thickness of approximately 12 mm, are emptied into a stationary mixer and 28 g of an anti-foam additive is stirred into 3.41 l of emulsion which is then poured into the stationary mixer. Mixing is then commenced and 10 Kg of alumina cement added a little at a time. After thogough mixing a minimum (if required) of water is added to the mix only to achieve good workability and compaction. When a handful of mix is squeezed in the hand it should form a coherent mass and thus produce just the correct workability to be "closed" when worked gently with a steel trowel or wooden float. It is important not to use excess water.

Consolidation, levelling and finishing are achieved by normal methods. The mix should be loose ruled off, tamped with an aluminium screed bar and immediately trowelled up lightly with a steel float filling in any small holes in the surface at the same time. The required finish must be achieved at this stage since once the initial surface set has occurred retrowelling is not possible.

Under severe drying conditions, for example with air draughts across the screed surface, polythene sheets must be used, these being kept clear of the mix surface but secured at their edges to the surrounding surface. The newly laid surface normally can take normal foot and light, rubber, - wheeled traffic after 24 hours, and heavy traffic after 2 to 5 days.

The strength of the surface may be varied by varying size of the aggregate thus allowing variation in the surface thickness.

A building material according to the present invention provides an improved resistance to steam cleaning, thermal shock and normal industrial environments, together with an improved abrasion resistance. In addition, a compressive strength of up to 100 $N/mm^2$ and an improved anti-slip surface may be obtained.

0014541

CLAIMS:

1. A building material comprising a mixture of an alumina based aggregate, cement, a multi-polymer emulsion and a lightweight aggregate or concrete sand.

2. A building material as claimed in claim 1 further comprising an anti-foam additive.

3. A building material as claimed in claim 1 or 2 wherein the lightweight aggregate or concrete sand meets the specification of British Standards 882 Part 2: 1973 Zone 4.

4. A building material as claimed in any of claims 1 to 3 wherein said alumina based aggregate has a particle size in the range 180 mesh to 6 mm.

5. A building material as claimed in claim 4 wherein said alumina based aggregate has a substantially uniform particle size.

6. A building material as claimed in any of claims 1 to 5 wherein said alumina based aggregate comprises a minimum of 60% alumina.

7. A building material as claimed in any of claims 1 to 6 wherein said alumina based aggregate has a minimum hardness 6 measured on the Mohs scale.

8. A building material as claimed in any of claims 1 to 7 wherein said multi-polymer emulsion is an acrylic water-based resin emulsion.

9. A floor surfacing when made of a building material according to any of claims 1 to 8.

0014541

## DOCUMENTS CONSIDERED TO BE RELEVANT

| Category | Citation of document with indication, where appropriate, of relevant passages | Relevant to claim |
|---|---|---|
| X | US - A - 4 088 804 (CORNWELL et al.) <br> * column 1, lines 66 to 68; column 2, lines 60 to 68 * <br> -- | 1 |
| | DE - B2 - 2 048 847 (DIAMOND SHAMROCK CORP.) <br> * claim 1 * <br> -- | 2 |
| | DE - B - 1 471 100 (DOW CHEMICAL CO.) <br> * claim 5 * <br> -- | 2 |
| | CH - A5 - 564 493 (OLEAG AG) <br> * column 1, lines 52 to 56 * <br> -- | 8,9 |
| A | CH - A - 450 997 (C. BAILLOD DE LA JUILLIERE) <br> * whole document * <br> -- | |
| A | DE - A1 - 2 649 120 ( IMPERIAL CHEMICAL INDUSTRIES) <br> * whole document * <br> ---- | |

**CLASSIFICATION OF THE APPLICATION (Int. Cl.3)**

E 04 F 15/12
C 04 B 13/00
C 04 B 15/00

**TECHNICAL FIELDS SEARCHED (Int.Cl.3)**

C 04 B 13/00
C 04 B 15/00
E 04 F 15/12

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search <br> Berlin | Date of completion of the search <br> 24-04-1980 | Examiner <br> v. WITTKEN | |

EPO Form 1503.1  06.78